Europäisches Patentamt

European Patent Office

Office européen des brevets

(19)

(11) Veröffentlichungsnummer: **0 031 896**
**B1**

# (12) EUROPÄISCHE PATENTSCHRIFT

(45) Veröffentlichungstag der Patentschrift:
**09.11.83**

(21) Anmeldenummer: **80107451.9**

(22) Anmeldetag: **28.11.80**

(51) Int. Cl.³: **C 02 F 3/12,** C 02 F 3/16

(54) **Verfahren und Vorrichtung zur biologischen Abwasserreinigung.**

(30) Priorität: **21.12.79 DE 2951604**

(43) Veröffentlichungstag der Anmeldung:
**15.07.81 Patentblatt 81/28**

(45) Bekanntmachung des Hinweises auf die Patenterteilung:
**09.11.83 Patentblatt 83/45**

(84) Benannte Vertragsstaaten:
**BE FR GB IT LU NL**

(56) Entgegenhaltungen:
**CH - A - 518 239**
**DE - A - 2 554 169**
**FR - A - 1 528 179**
**US - A - 3 803 806**

(73) Patentinhaber: **Dr. C. Otto & Comp. Gesellschaft mit beschränkter Haftung, Christstrasse 9,
D-4630 Bochum 1 (DE)**

(72) Erfinder: **Birkner, Andreas, Dahlhauser-Höhe 64,
D-4630 Bochum 5 (DE)**

(74) Vertreter: **Radt, Finkener, Ernesti Patentanwälte,
Heinrich-König-Strasse 119, D-4630 Bochum 1 (DE)**

Verfahren und Vorrichtung zur biologischen Abwasserreinigung

Die Erfindung betrifft ein Verfahren zum Betrieb einer biologischen Abwasserreinigung, bei dem das zu behandelnde Wasser in einem Bakterien enthaltenden Behälter mittels einer Belüftungseinrichtung, die vorzugsweise im Bereich des Wasserspiegels der in dem Behälter befindlichen Flüssigkeit angeordnet ist, belüftet wird. Das Abwasser läuft nach einer bestimmten Verweilzeit, während der es belüftet wird und der Einwirkung der Bakterien ausgesetzt ist, aus dem Behälter ab. Der für die Aufrechterhaltung und Vermehrung des Bakterienstammes erforderliche Sauerstoff wird über eine Belüftungseinrichtung zugeführt, die vorzugsweise aus einem rotierenden Kreisel besteht und die die Oberfläche des zu behandelnden Wassers ständig aufwirbelt, so daß es sich mit Luft anreichert, die den gesamten Behälterinhalt durchsetzt. Es kann auch ein anderes, z. B. auf dem Boden angeordnetes Belüftungssystem, verwendet werden.

Beim Betrieb einer derartigen Abwasserreinigungsanlage ist es notwendig, die Temperatur in dem Belüftungsbehälter unabhängig von der gerade herrschenden Außentemperatur und der Zulauftemperatur des zu behandelnden Wassers möglichst in der Nähe der optimalen Temperatur zu halten, die den besten Abbauwirkungsgrad durch die Bakterien gewährleistet. Erfolgt dies nicht, so kommt es, insbesondere wenn die Außentemperatur stark absinkt, aber auch bei zu hohen Temperaturen zu einer erheblichen Reduzierung der Abbauleistung, die sogar bis fast auf den Nullwert abfallen kann.

Es wurde schon in Erwägung gezogen, in dem Belüftungsbehälter selbst Wärmeaustauschflächen anzuordnen oder Direktdampf einzuleiten, um beim Absinken der Außentemperatur mittels eines Heizmediums den Beckeninhalt aufzuwärmen. Dabei hat sich herausgestellt, daß die temperaturempfindlichen Bakterien, die mit den heißen Wärmeaustauschflächen in Berührung kamen, abstarben. Es war darüber hinaus erforderlich, die Wärmeaustauschflächen infolge der starken Schlammablagerungen einer häufigen Reinigung zu unterziehen, so daß sich diese Methode als nicht durchführbar erwiesen hat.

Eine andere Möglichkeit, den Behälter dadurch auf einer bestimmten Temperatur zu halten, daß das zugeführte Abwasser und/oder der Rücklaufschlamm vor Eintritt in den Behälter aufgeheizt wird, hat sich ebenfalls als unzweckmäßig erwiesen, weil sich örtliche Überhitzungen innerhalb des Beckens bzw. an den Wärmeaustauschflächen, die zum Absterben der Bakterien führen, nicht vermeiden lassen und zum anderen größere Abwassermengen zur Aufrechterhaltung der Temperatur zugeführt werden müßten, die das Einhalten einer bestimmten Verweilzeit nicht gewährleisten. Darüber hinaus sind die Abstrahlungsverluste an der Wasseroberfläche zu hoch.

Der Erfindung liegt die Aufgabe zugrunde, eine biologische Reinigungsanlage unter Vermeidung der vorstehend erwähnten Nachteile so zu betreiben, daß zu allen Jahreszeiten unabhängig von der jeweils herrschenden Außentemperatur optimale Abbaubedingungen in dem Belüftungsbehälter vorliegen.

Ausgehend von dem eingangs beschriebenen Verfahren besteht die Erfindung darin, daß auf die Oberfläche des in dem Behälter befindlichen Abwassers ein Heizmedium, vorzugsweise Wasserdampf, aufgegeben wird, das möglichst gleichmäßig über die gesamte Fläche verteilt wird.

Die Erfindung sieht ferner vor, daß die Menge des zugeführten Heizmediums in Abhängigkeit von der Temperatur des in dem Behälter befindlichen Wassers zudosiert wird.

Bei einer Vorrichtung zur Durchführung des Verfahrens, die einen Belüftungsbehälter mit einem Zulauf für das Abwasser, einen Ablauf für das behandelte Wasser sowie eine Belüftungseinrichtung, vorzugsweise einen im Oberflächenbereich des in dem Behälter befindlichen Wassers rotierenden Belüftungskreisel enthält, besteht die Erfindung darin, daß oberhalb des Wasserspiegels, vorzugsweise oberhalb des Belüftungskreisels, eine vorzugsweise ringförmige, mit Öffnungen versehene Verteilerleitung angeordnet ist, die mit einer Leitung zur Zufuhr von Wasserdampf verbunden ist.

Es hat sich herausgestellt, daß sich bei der Durchführung des erfindungsgemäßen Verfahrens das auf die Oberfläche des in dem Behälter befindlichen Wassers aufgebrachte Heizmedium, insbesondere wenn es sich um Wasserdampf handelt, wie eine Nebelschicht oberhalb des Wasserspiegels sammelt und daß der Behälterinhalt trotz des Eintrags von kalter Luft praktisch keine Abkühlung erfährt, da Wärmeverluste durch das Belüftungsmedium, das sich beim Durchtritt durch das Belüftungsmedium, das sich beim Durchtritt durch das Wasser erwärmt und sich beim Wiederaustritt aus dem Wasser oder durch Berührung mit demselben aufsättigt und somit durch Verdunstung oder durch direkten Wärmeaustausch mit dem Beckeninhalt vermieden werden. Gleichzeitig werden bei dem Verfahren auch die Abstrahlungs- und Konvektionsverluste an der Wasseroberfläche sowie Wandverluste kompensiert.

Die Einstellung einer geeigneten optimalen Beckentemperatur erfolgt durch Regelung der Menge des zugeführten Heizmediums, die sowohl von Hand als auch über die Beckentemperatur automatisch gesteuert werden kann.

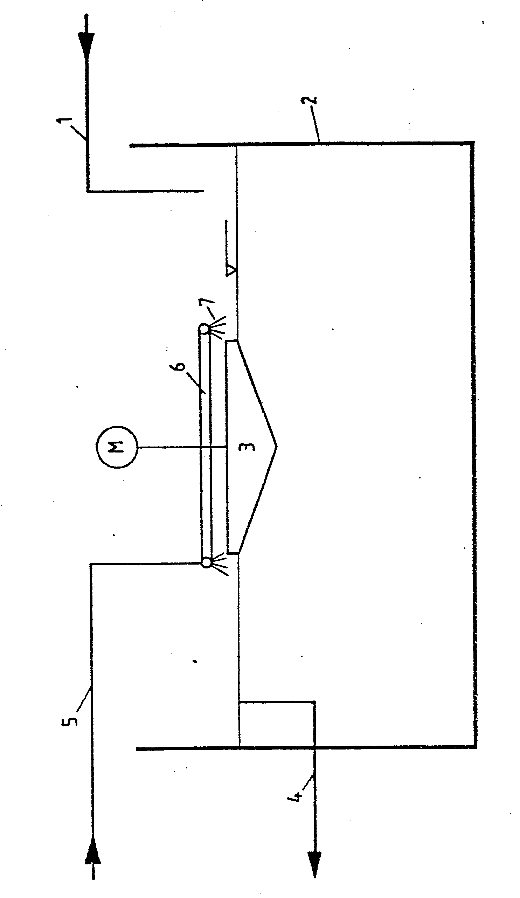

Auf der Zeichnung ist ein Ausführungsbeispiel einer Vorrichtung zur Durchführung des Verfahrens dargestellt.

Das zu belüftende Abwasser tritt über die Leitung 1 in den Belüftungsbehälter 2 ein und wird mittels eines rotierenden Kreisels 3 belüftet, der von einem Motor M angetrieben wird und sich im Bereich der Oberfläche des in dem Behälter befindlichen Abwassers dreht. Das behandelte Abwasser tritt aus dem Behälter über die Leitung 4 aus. Über die Leitung 5 wird ein Heizmedium, vorzugsweise Wasserdampf, zugeführt, der in einen Verteilerring 6 eingeleitet wird, der mit nach unten gerichteten Öffnungen 7 versehen ist. Der Verteilerring ist bei dem dargestellten Ausführungsbeispiel zentrisch zu dem Belüftungskreisel 3 angebracht und wird in einer geeigneten Höhe über dem Wasserspiegel angeordnet. Auf diese Weise erfolgt eine gleichmäßige Verteilung des Heizmediums über dem gesamten Wasserspiegel.

Es können auch mehrere Verteileinrichtungen in einem Belüftungsbehälter vorgesehen oder mehrere, z. B. nebeneinander angeordnete Belüftungsbehälter, benutzt werden.

## Patentansprüche

1. Verfahren zum Betrieb einer biologischen Abwasserreinigung, bei dem das zu behandelnde Wasser in einem Bakterien enthaltenden Behälter mit einer Belüftungseinrichtung, vorzugsweise mittels eines im Oberflächenbereich des in dem Behälter befindlichen Wassers rotierenden Kreisels belüftet wird und aus dem das Wasser nach einer bestimmten Verweilzeit abläuft, dadurch gekennzeichnet, daß auf die Oberfläche des Wasserspiegels von außen ein Heizmedium aufgegeben wird, das möglichst gleichmäßig über die gesamte Oberfläche verteilt wird.

2. Verfahren nach Anspruch 1, dadurch gekennzeichnet, daß das Heizmedium Wasserdampf ist.

3. Verfahren nach den Ansprüchen 1 und 2, dadurch gekennzeichnet, daß die Menge des zugeführten Heizmediums in Abhängigkeit von der Temperatur des in dem Behälter befindlichen Wassers zudosiert wird.

4. Vorrichtung zur Durchführung des Verfahrens nach den Ansprüchen 1 bis 3, bestehend aus einem Belüftungsbehälter mit einem Zulauf für das zu behandelnde Wasser und einem Abzug für das behandelte Wasser, sowie einer oder mehreren Belüftungseinrichtungen, vorzugsweise im Oberflächenbereich des in dem Behälter befindlichen Wassers angeordneten rotierenden Belüftungskreiseln, dadurch gekennzeichnet, daß oberhalb des Wasserspiegels, vorzugsweise jedes Belüftungskreisels (3) eine mit Öffnungen (7) versehene Verteilereinrichtung (6) angeordnet ist, die mit einer Leitung (5) zur Zufuhr von Wasserdampf verbunden ist.

5. Vorrichtung nach Anspruch 4, dadurch gekennzeichnet, daß die Verteilereinrichtung eine Ringleitung ist.

## Claims

1. A method of operating a biological waste water purification system, in which the water for treatment is aerated in a bacteria-containing tank by means of an aerating device, preferably by means of a centrifuge rotated in the region of the surface of the water in the tank, the water leaving the said tank after a specific residence time, characterised in that a heating medium is fed from outside to the surface of the water and is distributed as evenly as possible over the entire surface.

2. A method according to claim 1, characterised in that the heating medium is steam.

3. A method according to claims 1 and 2, characterised in that the quantity of heating medium supplied is metered in dependence on the temperature of the water in the tank.

4. Apparatus for performing the method according to claims 1 to 3, consisting of an aeration tank having an inlet for the water for treatment and an outlet for the treated water, and one or more aerating devices, preferably rotating aeration centrifuges disposed in the region of the surface of the water in the tank, characterised in that a distributor device (6) formed with apertures (7) and connected to a pipe (5) for the supply of steam is disposed above the water level of preferably each aeration centrifuge (3).

5. Apparatus according to claim 4, characterised in that the distributor device is a ring pipe.

## Revendications

1. Procédé pour la mise en œuvre d'une purification biologique d'eaux usées, dans lequel l'eau devant être traitée est aérée dans un réservoir contenant des bactéries qui comporte un dispositif d'aération, de préférence au moyen d'un organe centrifuge tournant dans la région de la surface de l'eau qui se trouve dans le réservoir, et duquel l'eau ressort après un temps de séjour déterminé, caractérisé par le fait que sur la surface du niveau d'eau est envoyé de l'extérieur un agent chauffant qui est réparti aussi uniformément que possible sur toute la surface.

2. Procédé suivant la revendication 1, caractérisé par le fait que l'agent chauffant est de la vapeur d'eau.

3. Procédé suivant les revendications 1 et 2, caractérisé par le fait que la quantité de l'agent chauffant amené est dosée en fonction de la température de l'eau qui se trouve dans le réservoir.

4. Dispositif pour la mise en œuvre du procédé suivant les revendications 1 à 3, constitué par un réservoir d'aération comportant une entrée pour l'eau devant être traitée et une sortie pour l'eau traitée, ainsi qu'un ou plusieurs dispositifs d'aération, de préférence des organes centrifuges d'aération tournants disposés dans la région de la surface de l'eau se trouvant dans le réservoir, caractérisé par le fait qu'au-dessus du niveau d'eau, de préférence de chaque organe centrifuge d'aération (3), est disposé un dispositif distributeur (6) muni d'ouvertures (7) qui est couplé à une conduite (5) pour l'amenée de vapeur d'eau.

5. Dispositif suivant la revendication 4, caractérisé par le fait que le dispositif distributeur est une conduite annulaire.

0 031 896